# EUROPEAN PATENT SPECIFICATION

(11) **EP 3 038 460 B1**
(45) Date of publication and mention of the grant of the patent: **30.08.2017**
(21) Application number: 14739263.3
(22) Date of filing: 03.07.2014
(51) Int. Cl.: A01K 5/00, B62D 21/02, B60K 1/04

(54) **MIXER FEEDER AND METHOD FOR PERFORMING MAINTENANCE ON SUCH A MIXER FEEDER**
MISCHERZUFÜHRER UND VERFAHREN ZUM WARTEN SOLCH EINES MISCHERZUFÜHRERS
MÉLANGEUR-DISTRIBUTEUR ET PROCÉDÉ POUR EFFECTUER LA MAINTENANCE D'UN TEL MÉLANGEUR-DISTRIBUTEUR

(30) Priority: 29.08.2013 NL 2011356
(43) Date of publication of application: 06.07.2016
(73) Proprietor: PEETERS LANDBOUWMACHINES B.V., 4879 NE Etten-Leur (NL)
(72) Inventor: PEETERS, Daniel Petrus Marie, B-2920 Nieuwmoer - Kalmthout (BE)
(74) Representative: Algemeen Octrooi- en Merkenbureau B.V.
(86) International application number: PCT/NL2014/050437
(87) International publication number: WO 2015/030574

(56) References cited:
- FR-A- 867 778
- FR-A- 1 011 256
- US-A- 4 907 538
- US-A- 5 833 023

## Description

The invention relates to a mixer feeder.

Mixer feeders are used to load, mix and cut ingredients for cattle feed while the mixer feeder is being transported to the location where the mixed feed has to be distributed. A tractor vehicle, typically a tractor, can for this purpose move a drawn vehicle, i.e. the mixer feeder, coupled to the tractor vehicle to a storage location for ingredients somewhere on a farmyard of a cattle farm. Having arrived at said location, the mixer feeder is loaded directly from a silo above the mixer feeder or for instance with a second vehicle provided with loading means, such as typically a scoop or with a loading means fixed to the mixer feeder.

While the mixing tub is being loaded with feed, one or a number of mixing elements, typically augers, in the mixing tub are already rotatably driven by the drive unit of the tractor vehicle, which is coupled to the mixer feeder via a so-called power takeoff (PTO). Once loading of the mixing tub is completed, the assembly of tractor vehicle and drawn vehicle drives to a location where cattle are kept, typically a livestock accommodation, on the cattle farm. During this movement the mixing elements can continue to operate, which is often the case in practice. After the feed in the mixing tub has been sufficiently mixed and cut, the mixer feeder is moved past the cattle by the tractor vehicle, during which movement the feed is ejected from the mixing tub via an open door in the mixing tub wall by rotating mixing elements and thus presented to the cattle.

For driving of the mixing elements a mixer feeder can be provided, in addition to the coupling to the power takeoff, with an electric drive which can be coupled via a coupling to the drive of the mixing elements. When the tractor vehicle is coupled, the tractor vehicle can provide for the driving of the mixing elements via the power takeoff. When the tractor vehicle is uncoupled, the electric drive can provide for the driving of the mixing elements. The electric drive can be supplied with power, for instance via a power supply rail in the livestock accommodation with a branch for the mixer feeder, via a cable or via storage means for energy provided on the mixer feeder in the form of batteries forming part of the electric drive, see e.g. document US-A-4907538. A drawback of such an electric drive with storage means provided on the mixer feeder is that it is relatively costly and takes up a great deal of space as a result of the high electric power demand.

An object of the present invention is to provide a mixer feeder with a further improved drive according to claim 1. An advantage of the mixer feeder according to the present invention is that, by accommodating the energy storage means in the inner space of the at least one chassis beam, the space available on the mixer feeder is utilized efficiently and no additional provisions, such as bins suspended under the mixer feeder, need be arranged for accommodating the storage means therein. The use of the chassis beams, which take a very robust form because of the supporting function thereof, moreover results in the possibility of applying battery cells which are highly favourable in terms of cost, such as traction battery cells, which type of battery does not have its own housing. The chassis beam thus forms here an exceptionally robust and safe housing for the energy storage means.

The at least one mixing element arranged in the mixing tub is quite preferably an auger. In an embodiment the mixer feeder has one auger. In an alternative embodiment the mixer feeder has two or more augers, preferably two augers, preferably disposed successively in the mixing tub as seen in longitudinal direction of the mixer feeder.

The present invention relates particularly, though not exclusively, to a mixer feeder configured to be employed as drawn vehicle. The mixer feeder therefore quite preferably has coupling means provided on a front side of the chassis for coupling the mixer feeder behind a tractor vehicle.

In an alternative embodiment the mixer feeder is embodied as hybrid vehicle. The mixer feeder can be embodied as independently mobile and controllable vehicle, and can for instance comprise for this purpose a driver's cab and a drive motor such as a combustion engine for moving the mixer feeder over a ground surface. The mixer feeder moreover has at least one steerable axle. The drive motor can likewise be connected via a power takeoff to the at least one mixing element for the purpose of supplying drive power to the at least one mixing element additionally to the drive power supplied by the electric motor, for rotatable driving of the mixing element.

In a favourable preferred embodiment the chassis is constructed substantially from two parallel chassis beams located at a mutual distance and extending in a longitudinal direction of the mixer feeder. The chassis beams are quite preferably manufactured from steel.

Each of the at least one chassis beam preferably has a rectangular cross-section with four peripheral wall parts, comprising a basic part formed by three of the four peripheral wall parts, and a cover part which is connected releasably to the basic part and which forms the fourth of the four peripheral wall parts. A hollow chassis beam is thus formed which is nevertheless readily accessible for the purpose of for instance maintenance of the batteries.

It is favourable here for the basic part to be formed by a lower wall and two mutually opposite side walls of the chassis beam, and wherein the cover part forms an upper wall of the chassis beam. Or the basic part has an open upper side which is closable with the cover part. The energy storage means can hereby be lowered easily into the inner space from above.

In an alternative preferred embodiment the at least one chassis beam is formed by a U-shaped profile with an open upper side, similarly to the above specified basic part. The mixing tub with a bottom thereof, quite preferably an at least substantially flat bottom, connecting at least substantially directly onto the open upper side of the at least one chassis beam is provided here such that said bottom of the mixing tub forms a cover for the open upper side of the at least one chassis beam.

The cover part and the basic part are preferably configured such that, making use of connecting means, they are mutually fixable along the length of the chassis beam. In an embodiment the connecting means comprise protrusions which are provided on one of the basic part and the cover part and which in mounted position drop into recesses provided in the other of the basic part and the cover part for the purpose of increasing the stiffness of the chassis beam. The connecting means can further comprise screw connecting means for mutually fixing the basic part and cover part.

It is favourable for the storage means to comprise a plurality of batteries mutually connected in series, preferably comprising traction battery cells of about 2 V. Such traction battery cells, which type of battery does not have its own housing, can be advantageously applied owing to the above stated robustly embodied chassis beams. The chassis beam thus forms an exceptionally robust and safe housing here for the traction battery cells.

It is further favourable for the outer end surfaces of the basic part of the at least one chassis beam to be closed by end plates and wherein the cover part at least substantially wholly closes the open side of the basic part, wherein the chassis beam comprises a passage for gas from the inner space to the outside environment for the purpose of guiding gas emission from the traction battery cells out of the inner space during operation.

For the purpose of stable support of the mixing tub it is favourable for each of the two chassis beams to have at the position of their opposite outer end surfaces a support point for supporting the mixing tub therewith at the position of, or at least close to a respective corner thereof. In an embodiment the support points each comprise a weighing sensor to enable weighing at the relevant support point the weight of the mixing tub supported at this support point. According to the invention the mixing tub is arranged on the chassis for movement relative to the chassis. This provides access to the energy storage means in efficient manner.

In a preferred embodiment the mixing tub is connected to the chassis for pivoting about a pivot axis. In an embodiment the mixer feeder comprises moving means operative between the chassis and the mixing tub for pivoting the mixing tub about the pivot axis relative to the chassis.

It is favourable here for two support points located on the same respective end surface of the chassis beams to define the pivot axis, which then thus extends in transverse direction of the mixer feeder. If as described above the chassis beams have a basic part formed by three of the four peripheral wall parts, i.e. the bottom and the two mutually opposite side walls, and have a cover part which is connected releasably to the basic part and forms the fourth of the four peripheral wall parts, i.e. the upper wall, or if the chassis beams are U-shaped with an open upper side, in an embodiment of the mixer feeder according to the invention an opening is also arranged in a side wall of a chassis beam facing toward an outer side of the mixer feeder and close to the outer end surface where the pivot axis is located, which opening is closable by a closing plate and through which opening the energy storage means are accessible. Parts of the energy storage means lying close to the pivot axis can hereby also be accessed easily from a side, since close to the pivot axis the bottom of the mixing tub is situated relatively close to the chassis beams in a situation where the mixing tub is pivoted away from the chassis. The closing plates are preferably such that they fit with a protruding portion thereof into the opening in said side wall of the chassis beam and connect to the peripheral wall of the opening, and are further firmly fixable preferably with a bolt connection to said side wall so that the stiffness of the chassis beam decreases as little as possible at the position of the opening.

In a favourable preferred embodiment the support points provided on the one front outer end surface of the chassis beams as well as the support points provided on the other opposite rear outer end surface of the chassis beams form respectively a front and rear pivot axis which thus both extend in transverse direction and parallel to each other, wherein the moving means are operative roughly in the middle between the front and rear outer end, wherein the mixer feeder comprises blocking means to enable mutually independent blocking of movement of the mixing tub relative to the chassis at respectively the front and rear pivot axes. It is hereby possible to opt to lift the rear side of the mixing tub or the front side of the mixing tub with the moving means by blocking either the blocking means associated with the rear pivot axis or the blocking means associated with the front pivot axis. Because the moving means are operative roughly in the middle, they need not be arranged twice, i.e. at the front outer end and at the rear outer end. The moving means are preferably formed by a piston-cylinder combination operative between the mixing tub and a chassis beam. Such a piston-cylinder combination is preferably provided per chassis beam. In an embodiment the piston-cylinder combination, or the piston-cylinder combinations jointly, is/are manually controllable by an individual such as with a hydraulic pump provided with a manual operating element such as a handle. In another embodiment the piston-cylinder combination, or the piston-cylinder combinations jointly, is/are automatically controllable by means of an electric motor connected to a hydraulic pump. The electric motor can be switched on or off via a control element such as a switch to be operated by an individual.

In an alternative embodiment the chassis comprises a guide which forms part of the moving means, and the mixing tub comprises a counter-guide which forms part of the moving means and which co-acts with the guide to enable movement of the mixing tub over the guide for the purpose of moving the mixing tub at least partially off the chassis. The one of the guide and the counter-guide can comprise travel rollers and/or slide members, while the other of the guide and the counter-guide can comprise a sliding surface such as a rail. The mixing tub can be configured here in an embodiment for manual movement relative to the chassis. In another embodiment the moving means here comprise a moving element such as for instance a piston-cylinder combination, similarly manually or automatically controllable as described above, for moving the mixing tub relative to the chassis.

It is favourable here for the mixer feeder to comprise support legs for the purpose, in the situation where the mixing tub is at least partially moved off the chassis, of supporting a part of the mixing tub moved off the chassis on a ground surface.

In yet another alternative embodiment the moving means comprise lowering means for moving the chassis downward to a ground surface relative to wheel axles of wheels of the mixer feeder, wherein the mixing tub is provided with support legs for supporting the mixing tub directly on the ground at least during the downward movement of the chassis. The lowering means can comprise a height-adjustable wheel suspension.

For the purpose of favourable utilization of the inner space and for robust enclosing of a number of traction battery cells forming part of a battery pack, it is advantageous for at least one longitudinal and/or transverse partition to be arranged in the inner space of the at least one chassis beam for subdividing the inner space into a plurality of compartments. A compartment can preferably be dimensioned such that one battery pack of 48 2 V cells can be enclosed therein, or one 96 V battery pack.

In an extremely favourable preferred embodiment the coupling means comprise a drawbar coupling with two drawbar legs, which drawbar legs come together at the position of the coupling means and diverge rearward in the direction of the two chassis beams and are each connected to one of the two chassis beams.

The at least one mixing element preferably extends upward in the mixing tub from a bottom of the mixing tub, wherein the electric motor is situated under the bottom of the mixing tub.

It is further advantageous for the bottom of the mixing tub to extend just above an upper side of the two chassis beams, wherein the electric motor is situated between the two chassis beams. The space available on the mixer feeder is hereby utilized efficiently.

In an embodiment the mixer feeder is embodied as independently mobile and controllable vehicle, and comprises for this purpose a drive motor such as a combustion engine for moving the mixer feeder over a ground surface and at least two axles with wheels, of which at least one axle is a steered axle.

It is favourable here for the mixer feeder to comprise a driver position and a steering device controllable by a driver on the mixer feeder and connected to the steered axle.

In an embodiment the mixer feeder comprises loading means such as a scoop to enable filling of the mixing tub with feed.

The present invention further relates to a method for performing maintenance on embodiments of a mixer feeder according to the invention, wherein the mixing tub is arranged on the chassis for movement relative to the chassis, comprising the steps of:
a) moving the mixing tub away from the chassis with the moving means,
b) providing access to the inner space of the at least one chassis beam,
c) inspecting the energy storage means at least by an individual, and
d) moving the mixing tub back to the chassis again with the moving means.

Maintenance can in this way be performed on the energy storage means exceptionally quickly and easily. When the mixer feeder comprises a plurality of traction battery cells, step c) preferably comprises of replenishing at least one battery cell. Step a) preferably comprises of pivoting the mixing tub in an above specified manner about a pivot axis relative to the chassis. Advantages of the method according to the invention correspond to the above described advantages of the mixer feeder according to the invention.

The present invention will be elucidated hereinbelow on the basis of the description of a number of preferred embodiments of mixer feeders according to the invention with reference to the following figures, in which:
Figure 1 is a side view of a combination of a first preferred embodiment of a mixer feeder according to the invention with a tractor vehicle;
Figure 2a is a three-dimensional view of a part of the chassis of the mixer feeder according to figure 1;
Figure 2b is a three-dimensional view of a part of the chassis of the mixer feeder according to figure 1;
Figure 3 is a side view of a second preferred embodiment of a mixer feeder according to the invention;
Figure 4 shows the mixer feeder according to figure 3 in another operative position;
Figure 5 is a side view of a third preferred embodiment of a mixer feeder according to the invention;
Figure 6 is a side view of a fourth preferred embodiment of a mixer feeder according to the invention.

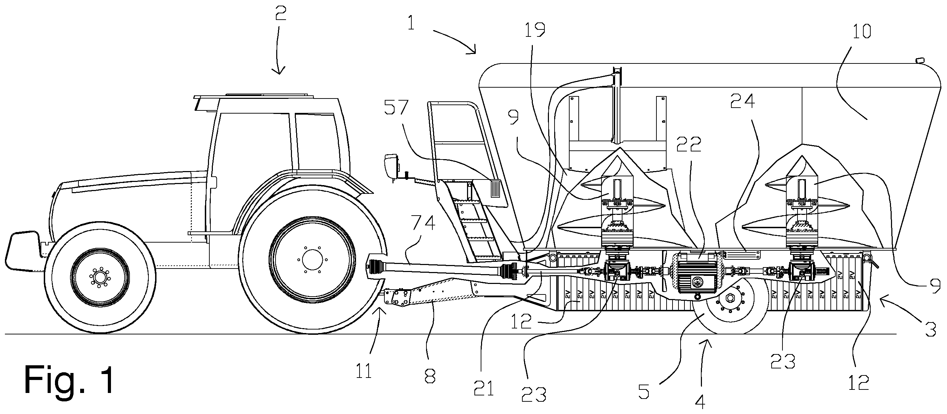

The mixer feeder 1 according to figure 1 comprises a chassis 3 provided with one axle 4 provided with wheels 5. The presence of more than one axle, such as for instance two axles, or a tandem axle, can likewise be envisaged and is possible within the scope of the invention. The mixer feeder 1 further has two driven rotatable mixing elements in the form of augers 9 arranged in a mixing tub 10 of the mixer feeder 1. A portion of a side wall of the mixing tub 10 is cut away in figure 1 for the purpose of making the augers 9 visible in figure 1. The mixer feeder 1 is mobile due to the axle 4 with wheels 5. The augers 9 are arranged with their rotation axis vertically in the mixing tub 10. Ingredients or feed components are moved upward by the augers 9. The feed components are mixed together by doing this for a determined time. Mixing elements can also be arranged in other manner within the scope of the invention, for instance horizontally in the mixing tub 10.

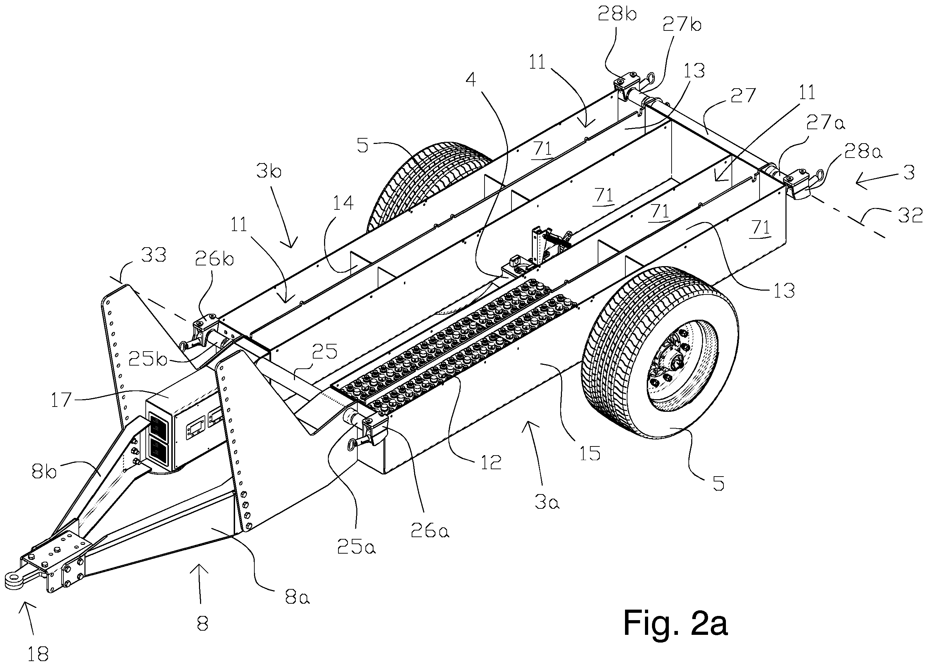

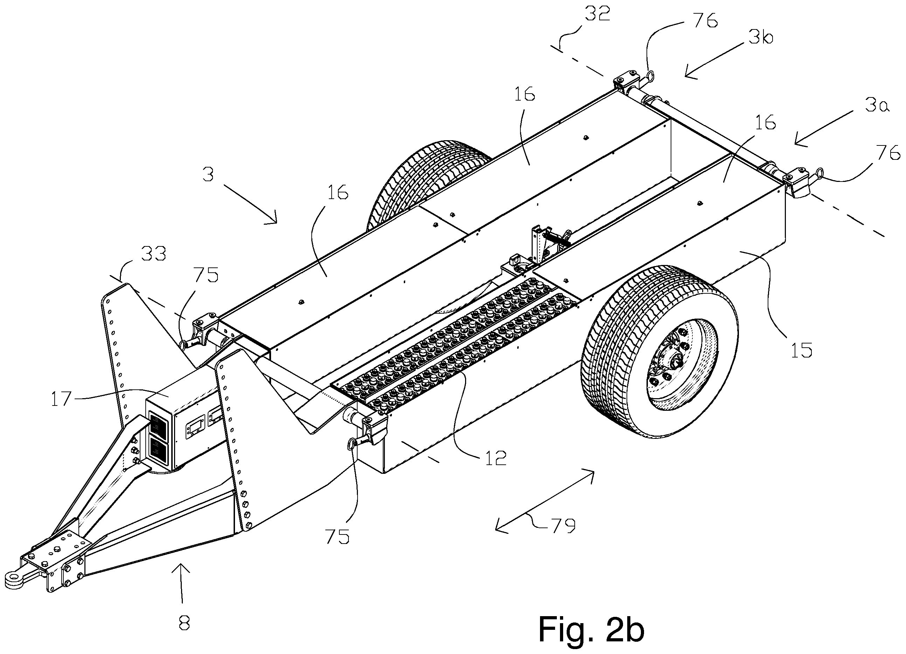

As shown particularly in figures 2a and 2b, the chassis 3 consists substantially of two parallel chassis beams 3a and 3b extending in longitudinal direction 79 of the mixer feeder 1. The chassis beams 3a, 3b are hollow and have an inner space 11 in which, as will be discussed in more detail below, energy storage means are received in the form of batteries 12. In figure 1 the chassis beam located on the visible side in figure 1 is transparent for the purpose of showing the batteries 12. The inner space 11 of the two chassis beams 3a, 3b is subdivided into different compartments by partitions 13 oriented in longitudinal direction and partitions 14 oriented in transverse direction.

As shown particularly in figures 2a and 2b, the chassis beams 3a, 3b each have a rectangular cross-section with four peripheral wall parts, and are constructed from a basic part 15 which is formed by three of the four peripheral wall parts, i.e. the bottom 72 and the two mutually opposite side walls 71, and from a cover part 16 releasable from the basic part 15 and forming the fourth of the four peripheral wall parts. As shown in figure 2b, the cover part 16 is formed per chassis beam 3a or 3b by two cover part elements 16 which are releasable separately of each other from the basic part 15. The cover part 16 and the basic part 15 are configured such that they are mutually fixable along the length of the chassis beam 3a, 3b by making use of connecting means. In order to increase the stiffness of the chassis beams 3a, 3b the cover part 16 is connected along the periphery thereof and also at the position of partition 13 to the basic part 15 with a bolt connection.

The mixer feeder 1 also has coupling means in the form of a traction coupling 18 provided on the free outer end of a drawbar coupling 8 for coupling as drawn vehicle behind a tractor vehicle 2, such as for instance a tractor as shown in figure 1. The drawbar coupling 8 has two drawbar legs 8a, 8b, which drawbar legs 8a, 8b come together at the position of the traction coupling 18 and diverge rearward in the direction of the two chassis beams 3a, 3b and are each connected to one of the two respective chassis beams 3a, 3b.

The mixing tub 10 has an at least substantially flat bottom 18 and is open on the upper side and can be filled by the ingredients for mixing being poured therein from above. By driving the augers 9 the ingredients are transported upward in the mixing tub 10 while due to a suctioning action of the augers 9 they move downward again adjacently of the augers. The ingredients are hereby mixed together. The mixing operation can be continued until it is observed, for instance by visual inspection, that the desired mixing has taken place. By opening unloading doors 19 provided on either side of the mixing tub 10 in the wall of the mixing tub 10 and activating the augers 9, feed from the mixing tub 10 can be provided via the opened unloading doors 19 to cattle in a livestock accommodation.

As shown in figure 1, the mixer feeder 6 comprises a drive for the augers 9. In order to show the drive clearly, a part of the chassis beam on the visible side, including the batteries received therein, is cut away in the figure. The drive comprises a common drive shaft 21 with which a coupling can be made to a power takeoff or PTO 74 of a tractor vehicle 2. This drive comprises at least one frequency-controlled electric motor 22 which is coupled to the common drive shaft 21 and which is coupled via the right-angled transmission 23 to an associated auger 9 for rotatable driving thereof about the vertical axis of the relevant auger 9. The right-angled transmission 23 can also have a continuous shaft so that it forms a part of the common drive shaft 21. When more than one electric motor is provided, these are mutually coupled where necessary by a further drive shaft in order to form the common drive shaft 21. It will be apparent to the person skilled in the art that, in the case of other types of mixing element not embodied as augers, other types of transmission will be possible and/or necessary. The common drive shaft can also consist of different, separate sections coupled to each other by means of transmissions for the mutual transfer of torque and rotation speed.

The electric motor 22 is connected for the purpose of autonomous operation of the mixer feeder 1 to battery packs comprising batteries 12 accommodated inside the chassis beams 3a and 3b of the chassis 3. The battery packs are configured for storage and generation of electrical energy for supplying power to the at least one electric motor 22. The battery packs are coupled by means of a converter 24 to each of the least one electric motor 22. Each battery pack comprises a plurality of batteries 12 mutually connected in series. The batteries are traction battery cells of about 2 V. Such batteries are frequently applied in forklift trucks. A battery pack can for instance comprise 48 cells or be a 96 V pack. In an embodiment of the mixer feeder, 96 volts can for safety reasons be the maximum allowable number of volts per battery pack. The packs are likewise mutually connected in series such that the total voltage supplied is adapted to the supply voltage required for the electric motor 22.

Charging means 17 for electrical charging of the battery packs are also provided. These are arranged on the drawbar coupling 8 of the mixer feeder 1 and can be connected to an external power supply. The charging means are alternatively not provided on the mixer feeder itself and can be connected by means of a cable connection to the battery packs.

Depending on the quantity and/or the composition of the feed for mixing, it is possible to opt to drive the augers only with the electric motor 22 or, by coupling on the power takeoff 74, to have additional power supplied to the augers by the tractor vehicle, whereby a higher mixing capacity can be obtained. In an embodiment of the invention the power takeoff 74 could also be used to charge the batteries by operating the electric motor 22 in generator mode.

The drive means for the augers 9 also comprise a control unit which is configured on the one hand to receive signals such as control signals from a control panel, or wirelessly via a wireless control apparatus, and to generate control signals to each converter 24 of each of the at least one electric motor 22. The batteries are monitored by the control unit. This means that properties of the batteries, such as water level and temperature, can be read with the control unit by making use of sensors suitable for the purpose. In an embodiment, when the control unit detects too low a water level in at least one battery or too high a temperature in at least one battery, an alarm signal such as illumination of a warning lamp can be generated. It is also possible in an embodiment that the mixer feeder, more specifically the motor 22 of the augers 9, is automatically switched off in the case of such an alarm signal.

Each of the chassis beams 3a, 3b is provided at the position of both outer end surfaces thereof with a support point for supporting the mixing tub 10 therewith. Arranged at the position of the two front outer end surfaces of the chassis beams 3a, 3b, i.e. located on the side of the drawbar coupling, are the support points 25a, 25b which form part of a connecting beam 25 which mutually connects the two chassis beams 3a, 3b at the front outer end surfaces. The support points 25a, 25b comprise respective weighing sensors to enable weighing at the position of the relevant support point 25a, 25b of the weight of the mixing tub 10 resting thereon. The same applies for the rear side of the mixer feeder 1 where a connecting beam 27 is arranged which mutually connects the two chassis beams 3a, 3b and comprises respective support points 27a, 27b at the outer ends thereof, which support points 27a, 27b comprises respective weighing sensors. This integration of weighing sensors in the support points makes it possible to precisely determine at the respective support points the weight of the mixing tub 10 supported thereon.

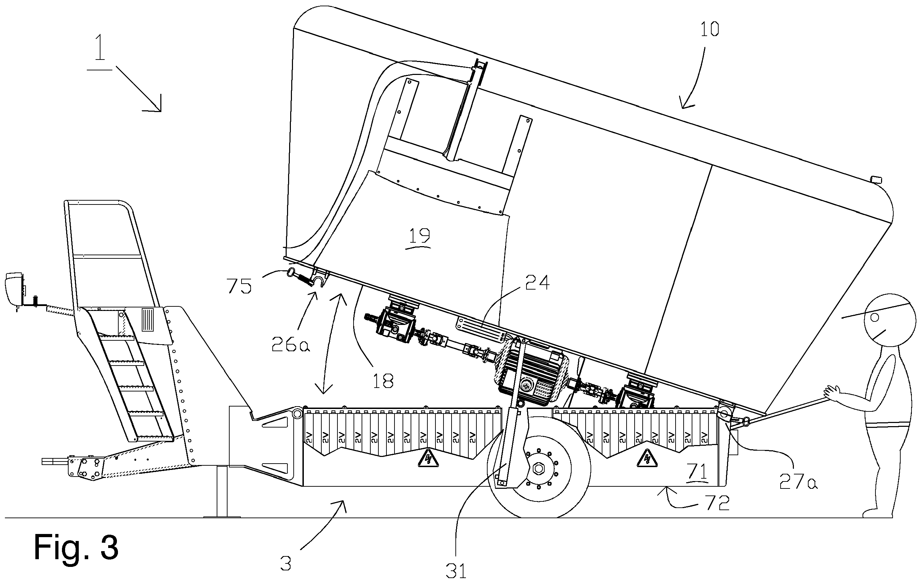

The mixing tub 10 is provided under the bottom 18 thereof with downward oriented U-shaped support blocks 26a, 26b which are configured to drop over the support points 25a and 25b. The support blocks are shown in figures 2a and 2b separately of the mixing tub at the position of the associated support points. Provided on the rear side of the mixing tub 10 are support blocks 28a, 28b which are configured to drop over the support points 27a, 27b. Both the first pair of support blocks 26a, 26b on the front side of the mixer feeder 1 and the rear pair of support blocks 28a, 28b on the rear side of the mixer feeder can be locked with blocking elements 75, 76 relative to the associated pair of respective support points 25a, 25b and 27a, 27b. The blocking elements 75, 76 can be formed by a blocking catch which connects the free outer ends of the two legs of the U-shape in a blocking position so as to thus enclose a support point in the U-shape. When only the rear support blocks 28a, 28b are locked, there results the situation as shown in figure 3. Using two piston-cylinder combinations 31 arranged roughly in the centre of the mixer feeder 1 as seen in longitudinal direction of the mixer feeder 1 and each operative between a chassis beam 3a or 3b of the chassis 3 and the mixing tub 10, this latter can here be raised relative to the chassis 3 and thus pivot about a horizontal pivot axis 32 oriented in transverse direction and defined by the two support points 27a, 27b. Access can hereby be provided in simple manner to the upper side of the chassis beams 3a, 3b, in particular more toward the front side, for the purpose of removing the cover part 16 from the basic part 15 thereof so as to be able to thus access the batteries 12. This is particularly important in the regular maintenance of the batteries or battery packs or for instance replenishment of the batteries with demineralized water.

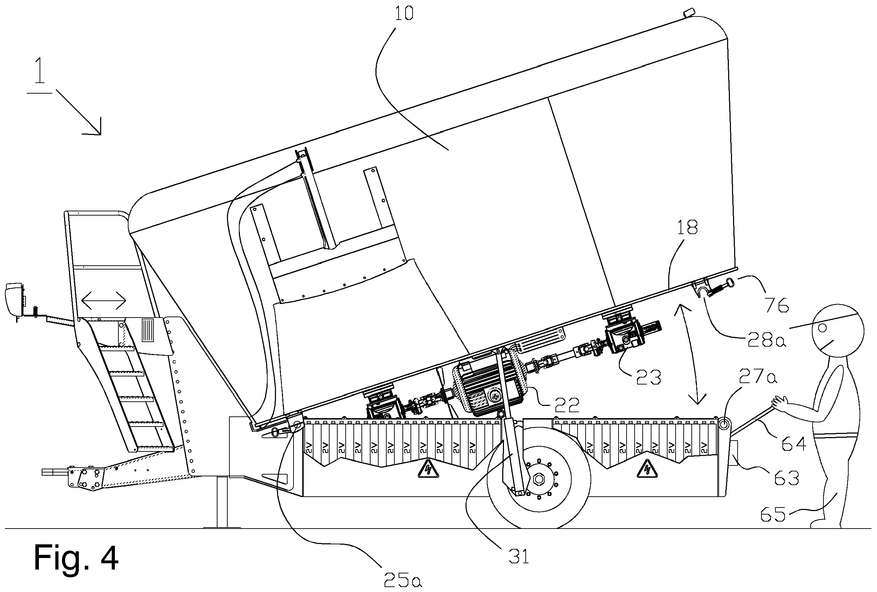

Figure 4 shows the situation where the support blocks 28a, 28b are conversely not blocked relative to the associated support points 27a, 27b while the support blocks 26a, 26b are blocked relative to the support points 25a, 25b by blocking elements 75. By actuating the piston-cylinder combinations 31 the mixing tub 10 is raised and pivots relative to the chassis 3 about the pivot axis 33 oriented in transverse direction and defined by the support points 25a, 25b. Access can hereby be gained to batteries 12, particularly the batteries located further to the rear of the mixer feeder 1. Actuation of the piston-cylinder combinations 31 takes place as shown in figure 4 by making use of a hydraulic pump 63 which is connected by hydraulic means to the piston-cylinder combinations 31. Provided on the pump 63 is a handle 64 which can be operated by an individual 65 in order to move the mixing tub 10 away from the chassis 3.

As shown particularly in figures 3 and 4, the drive of the augers 9, including the electric motor 22 and the transmissions 23, is arranged fixedly under the bottom 18 of the mixing tub 10, whereby during pivoting about either of the two pivot axes 32 or 33 it is in fact only necessary to ensure that the power cable from the battery packs to the converter 24 is sufficiently long to span the distance over which the mixing tub 10 is moved. In order to increase safety for an individual such as a maintenance engineer, in an embodiment of the mixer feeder battery packs, each of 96 V, and preferably four of such packs, are provided in the inner space of the chassis beams and mutually connected in series via connectors. The totality of the battery packs connected in series is connected to the electric motor. The connectors are provided such that the mixing tub cannot be moved relative to the chassis without first uncoupling the connectors, either by hand or in automated manner. Uncoupling has the result that, in a situation where the mixing tub has been moved relative to the chassis, the electrical connection between the battery packs and/or electric motor is broken so that there is no more than 96 V on electrical cables or terminals. In an embodiment the connectors are connected to the mixing tub such that the connectors are uncoupled as a result of the mixing tub being moved away from the chassis.

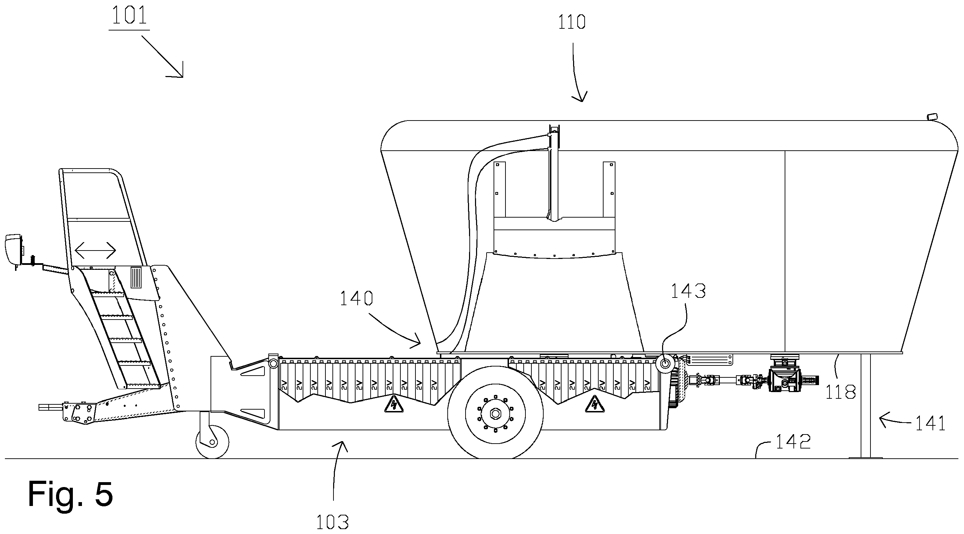

Figure 5 shows a mixer feeder 101 as further preferred embodiment of a mixer feeder according to the present invention. In respect of construction the mixer feeder 101 is highly similar to the above described mixer feeder 1, except for the manner in which relative movement of the chassis 103 and mixing tub 110 is provided.

In the mixer feeder 101 a guide 140 is arranged on the chassis beams between the chassis 103 and mixing tub 110 such that the mixing tub 110 can be moved backwards off the chassis 103. With the exception of the connection to the mixing tub, the chassis beams of the chassis 103 correspond to the above described chassis beams 3a and 3b of the mixer feeder 1. At a rear outer end of the mixing tub 110 extendable or swing-out support legs 141 can be provided under the bottom 118 of the mixing tub 110, one at each of the two corners, which form a support for the mixing tub 110 on the ground surface 142 in the situation where the mixing tub 110 is at least partially moved off the chassis 103. The guide 140 can for instance comprise guide rollers 143 at the rear outer end of the chassis 103 for supporting guiding of the mixing tub 110 off the chassis 103.

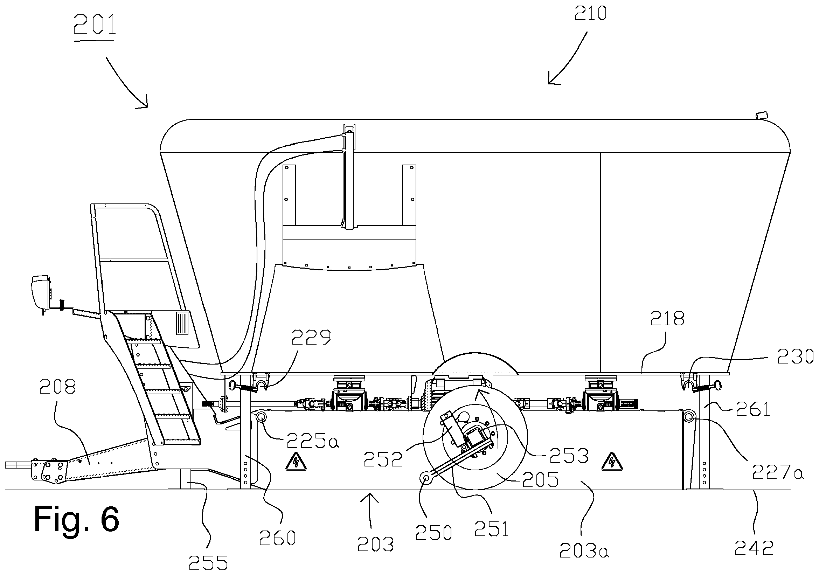

Figure 6 shows a mixer feeder 201 as yet another preferred embodiment of a mixer feeder according to the present invention. Except for the manner in which relative movement of the chassis 203 and mixing tub 210 is provided, the mixer feeder 201 is highly similar in respect of construction to the above described mixer feeder 1. The chassis 203 can be lowered onto the ground surface 242 in that the wheel suspension is adjustable in the height in combination with a height-adjustable additional support leg 255 at the position of the drawbar coupling 208 of the chassis 203. The wheels 205 are not mutually connected via a continuous shaft but are arranged rotatably on a respective wheel axle 253 which is connected fixedly to a wheel supporting arm 251 which is connected pivotally to the respective chassis beam 3a, 3b at the position of mounting point 250. For the sake of clarity the wheel 205 is shown in transparent view so that the wheel suspension, at least that on the visible side of the mixer feeder, is clearly discernible. It is stated for the sake of completeness that the wheel 205 is situated on the outer side and that the wheel suspension is situated between the wheel 205 and the chassis beam 203a. A piston-cylinder combination 252 which is also operative between the chassis beam 3a and the wheel supporting arm 251 can bring about the desired height adjustment of the chassis 203, since when the piston and the cylinder of the piston-cylinder combination 252 slide apart, the wheel supporting arm 251 is pivoted with the outer end thereof on which the wheel 205 is mounted downward around the mounting point 250 so that the chassis 203 is raised as a result. Before the chassis 203 is lowered from the normal situation of use, support legs, or at least respective pairs of support legs 260, 261, at the corners of the mixing tub 210 are extended so as to support the mixing tub 210 directly on the ground surface 242.

Present in an alternative embodiment at each of the corners of the chassis for the purpose of the relative movement between the mixing tub and the chassis is a piston-cylinder combination, which thus four piston-cylinder combinations can be synchronously actuated to lift the mixing tub straight upward relative to the chassis so as to thus make the batteries in the inner space of the two chassis beams accessible from above.

## Claims

1. A mixer feeder (1) for the purpose of providing feed to cattle, comprising:
- a chassis (3),
- at least two wheels connected to the chassis for rolling support of the mixer feeder on a ground surface,
- a mixing tub (10) for the feed arranged on the chassis,
- at least one mixing element (9) arranged in the mixing tub for the purpose of mixing the feed,
- an electric motor connected to the at least one mixing element for rotatable driving thereof,
- storage means, such as batteries (12), connected to the electric motor for storage and generation of electrical energy to the electric motor, wherein the chassis is constructed from at least one chassis beam (3a, 3b) with an inner space (11) in which the energy storage means are received, wherein the mixing tub is arranged on the chassis for movement relative to the chassis.

2. A mixer feeder according to claim 1, wherein the mixing tub is connected to the chassis for pivoting about a pivot axis, and wherein the mixer feeder comprises moving means operative between the chassis and the mixing tub for pivoting the mixing tub about the pivot axis relative to the chassis.

3. A mixer feeder according to claim 2, wherein the chassis is constructed substantially from two parallel chassis beams located at a mutual distance and extending in a longitudinal direction of the mixer feeder, each of the two chassis beams having at the position of their opposite outer end surfaces a support point for supporting the mixing tub therewith at the position of, or at least close to a respective corner thereof, two support points located on the same respective end surface of the chassis beams defining the pivot axis.

4. A mixer feeder according to claim 3, wherein the support points provided on the one front outer end surface of the chassis beams as well as the support points provided on the other opposite rear outer end surface of the chassis beams form respectively a front and rear pivot axis, wherein the moving means are operative roughly in the middle between the front and rear outer end, wherein the mixer feeder comprises blocking means to enable mutually independent blocking of movement of the mixing tub relative to the chassis at respectively the front and rear pivot axes.

5. A mixer feeder according to any one of the preceding claims, wherein each of the at least one chassis beam has a rectangular cross-section with four peripheral wall parts, comprising a basic part formed by three of the four peripheral wall parts, and a cover part which is connected releasably to the basic part and which forms the fourth of the four peripheral wall parts.

6. A mixer feeder according to claim 5, wherein the basic part is formed by a lower wall and two mutually opposite side walls of the chassis beam, and wherein the cover part forms an upper wall of the chassis beam.

7. A mixer feeder according to claim 6, wherein the cover part and the basic part are configured such that, making use of connecting means, they are mutually fixable along the length of the chassis beam.

8. A mixer feeder according to any one of the preceding claims, wherein the storage means comprise a plurality of batteries mutually connected in series, the plurality of batteries preferably comprising traction battery cells of about 2 V.

9. A mixer feeder according to claim 8 and according to claim 5 or a claim dependent thereon, wherein outer end surfaces of the basic part of the at least one chassis beam are closed by end plates and wherein the cover part at least substantially wholly closes the open side of the basic part, wherein the chassis beam comprises a passage for gas from the inner space to the outside environment for the purpose of guiding gas emission from the traction battery cells out of the inner space during operation.

10. A mixer feeder according to any one of the preceding claims, wherein the chassis comprises a guide and the mixing tub comprises a counter-guide which co-acts with the guide for moving the mixing tub over the guide for the purpose of moving the mixing tub at least partially off the chassis, the mixer feeder preferably comprising support legs for the purpose, in the situation where the mixing tub is at least partially moved off the chassis, of supporting a part of the mixing tub moved off the chassis.

11. A mixer feeder according to any one of the preceding claims, the moving means comprising lowering means for moving the chassis downward to a ground surface relative to wheel axles of wheels of the mixer feeder, wherein the mixing tub is provided with support legs for supporting the mixing tub directly on the ground at least during the downward movement of the chassis.

12. A mixer feeder according to any one of the preceding claims, wherein at least one longitudinal and/or transverse partition is arranged in the inner space of the at least one chassis beam for subdividing the inner space into a plurality of compartments.

13. A mixer feeder according to any one of the preceding claims, wherein the mixer feeder is, embodied as independently mobile and controllable vehicle, and comprises for this purpose a drive motor such as a combustion engine for moving the mixer feeder over a ground surface and at least two axles with wheels, of which at least one axle is a steered axle.

14. A mixer feeder according to claim 13, comprising a driver position and a steering device controllable by a driver on the mixer feeder and connected to the steered axle.

15. A method for performing maintenance on a mixer feeder (1) according to any one of the preceding claims 2 to 14, comprising the steps of:
a) moving the mixing tub (10) away from the chassis with the moving means,
b) providing access to the inner space (11) of the at least one chassis beam,
c) inspecting the energy storage means (12) at least by an individual, and
d) moving the mixing tub back to the chassis again with the moving means.

## Patentansprüche

1. Misch- und Zuführvorrichtung (1) zum Versorgen von Vieh mit Futter, die Folgendes umfasst:
- ein Fahrgestell (3),
- mindestens zwei Räder, die für eine rollende Abstützung der Misch-und Zuführvorrichtung auf einer Bodenfläche mit dem Fahrgestell verbunden sind,
- einen Mischtrog (10) für das Futter, der auf dem Fahrgestell angeordnet ist,
- mindestens ein Mischelement (9), das zum Mischen des Futters in dem Mischtrog angeordnet ist,
- einen Elektromotor, der mit dem mindestens einen Mischelement verbunden ist, um dieses in Drehung zu versetzen,
- Speichermittel, wie etwa Batterien (12), die mit dem Elektromotor verbunden sind, um elektrische Energie für den Elektromotor zu speichern und zu erzeugen,
wobei das Fahrgestell ausgehend von mindestens einem Fahrgestellträger (3a, 3b) mit einem Innenraum (11) hergestellt ist, in dem die Energiespeichermittel aufgenommen sind,
wobei der Mischtrog für eine relative Bewegung zum Fahrgestell auf dem Fahrgestell angeordnet ist.

2. Misch- und Zuführvorrichtung nach Anspruch 1, wobei der Mischtrog für eine Schwenkbewegung um eine Schwenkachse mit dem Fahrgestell verbunden ist und die Misch- und Zuführvorrichtung Verlagerungsmittel aufweist, die zum Verschwenken des Mischtrogs um die Schwenkachse in Bezug auf das Fahrgestell zwischen dem Fahrgestell und dem Mischtrog wirksam sind.

3. Misch- und Zuführvorrichtung nach Anspruch 2, wobei das Fahrgestell im Wesentlichen aus zwei parallelen Fahrgestellträgern hergestellt ist, die in einem Abstand zueinander angeordnet sind und sich in Längsrichtung der Misch- und Zuführvorrichtung erstrecken, wobei jeder der beiden Fahrgestellträger an der Stelle seiner gegenüberliegenden Außenendflächen einen Abstützpunkt aufweist, um damit den Mischtrog an der Stelle oder zumindest in der Nähe seiner entsprechenden Ecke abzustützen, wobei zwei Abstützpunkte auf ein und derselben entsprechenden Endfläche der Fahrgestellträger die Schwenkachse definieren.

4. Misch- und Zuführvorrichtung nach Anspruch 3, wobei die Abstützpunkte, die an der einen vorderen Außenendfläche der Fahrgestellträger vorgesehen sind, und die Abstützpunkte, die an der anderen, gegenüberliegenden hinteren Außenendfläche der Fahrgestellträger vorgesehen sind, eine vordere bzw. eine hintere Schwenkachse bilden, wobei die Verlagerungsmittel ungefähr in der Mitte zwischen dem vorderen und dem hinteren Außenende wirksam sind und die Misch- und Zuführvorrichtung Blockiermittel aufweist, so dass die Blockierung der Bewegung des Mischtrogs relativ zum Fahrgestell an der vorderen bzw. an der hinteren Schwenkachse unabhängig voneinander möglich ist.

5. Misch- und Zuführvorrichtung nach einem der vorhergehenden Ansprüche, wobei der mindestens eine Fahrgestellträger jeweils einen rechteckigen Querschnitt mit vier Umfangswandteilen aufweist, mit einem durch drei der vier Umfangswandteile gebildeten Basisteil und einem Abdeckteil, der lösbar mit dem Basisteil verbunden ist und den vierten der vier Umfangswandteile bildet.

6. Misch- und Zuführvorrichtung nach Anspruch 5, wobei der Basisteil durch eine untere Wand und zwei einander gegenüberliegende Seitenwände des Fahrgestellträgers gebildet ist und der Abdeckteil eine obere Wand des Fahrgestellträgers bildet.

7. Misch- und Zuführvorrichtung nach Anspruch 6, wobei der Abdeckteil und der Basisteil so ausgestaltet sind, dass sie unter Verwendung von Verbindungsmitteln entlang der Länge des Fahrgestellträgers aneinander befestigt werden können.

8. Misch- und Zuführvorrichtung nach einem der vorhergehenden Ansprüche, wobei die Speichermittel mehrere miteinander in Reihe geschaltete Batterien umfassen, wobei die mehreren Batterien vorzugsweise Traktionsbatteriezellen von etwa 2 V umfassen.

9. Misch- und Zuführvorrichtung nach Anspruch 8 und nach Anspruch 5 oder nach einem davon abhängigen Anspruch, wobei Außenendflächen des Basisteils des mindestens einen Fahrgestellträgers durch Endplatten geschlossen sind und der Abdeckteil die offene Seite des Basisteils im Wesentlichen vollständig verschließt, wobei der Fahrgestellträger einen Durchlass für Gas von dem Innenraum zur Außenumgebung aufweist, um im Betrieb den Gasausstoß von den Traktionsbatteriezellen aus dem Innenraum heraus zu leiten.

10. Misch- und Zuführvorrichtung nach einem der vorhergehenden Ansprüche, wobei das Fahrgestell eine Führung aufweist und der Mischtrog eine mit der Führung zusammenwirkende Gegenführung aufweist, so dass der Mischtrog über die Führung bewegt wird, um den Mischtrog zumindest teilweise von dem Fahrgestell zu entfernen, wobei die Misch- und Zuführvorrichtung vorzugsweise Abstützschenkel aufweist, um in dem Zustand, in dem der Mischtrog zumindest teilweise von dem Fahrgestell entfernt ist, einen Teil des von dem Fahrgestell entfernten Mischtrogs abzustützen.

11. Misch- und Zuführvorrichtung nach einem der vorhergehenden Ansprüche, wobei die Verlagerungsmittel Absenkmittel zum Bewegen des Fahrgestells bezogen auf die Radachsen der Räder der Misch- und Zuführvorrichtung nach unten zu einer Bodenfläche aufweist, wobei der Mischtrog mit Abstützschenkeln ausgestattet ist, um den Mischtrog zumindest während der Abwärtsbewegung des Fahrgestells direkt am Boden abzustützen.

12. Misch- und Zuführvorrichtung nach einem der vorhergehenden Ansprüche, wobei in dem Innenraum des mindestens einen Fahrgestellträgers mindestens eine Längs- und/oder eine Querabtrennung angeordnet ist, um den Innenraum in mehrere Abteile zu unterteilen.

13. Misch- und Zuführvorrichtung nach einem der vorhergehenden Ansprüche, wobei die Misch- und Zuführvorrichtung als einzeln bewegbares und steuerbares Fahrzeug ausgeführt ist und zu diesem Zweck einen Antriebsmotor, wie etwa einen Verbrennungsmotor zum Bewegen der Misch- und Zuführvorrichtung über eine Bodenfläche und mindestens zwei Achsen mit Rädern aufweist, wobei es sich bei mindestens einer Achse um eine Lenkachse handelt.

14. Misch- und Zuführvorrichtung nach Anspruch 13, mit einer Fahrerposition und einer Lenkvorrichtung, die von einem Fahrer auf der Misch- und Zuführvorrichtung gesteuert werden kann und mit der Lenkachse verbunden ist.

15. Verfahren zum Durchführen der Wartung einer Misch- und Zuführvorrichtung (1) nach einem der vorhergehenden Ansprüche 2 bis 14, das die Schritte umfasst, bei denen:
a) der Mischtrog (10) mit den Verlagerungsmitteln von dem Fahrgestell weg bewegt wird,
b) der Zugang zum Innenraum (11) des mindestens einen Fahrgestellträgers bereitgestellt wird,
c) die Energiespeichermittel (12) von mindestens einer Person geprüft werden und
d) der Mischtrog wieder mit den Verlagerungsmitteln zurück zum Fahrgestell bewegt wird.

## Revendications

1. Dispositif d'alimentation-mélangeur (1) servant à fournir un aliment pour animaux au bétail, comprenant :
- un châssis (3),
- au moins deux roues reliées au châssis pour faire rouler un support du dispositif d'alimentation-mélangeur sur une surface de sol,
- une cuve de mélange (10) pour l'aliment pour animaux agencée sur le châssis,
- au moins un élément de mélange (9) agencé dans la cuve de mélange dans le but de mélanger l'aliment pour animaux,
- un moteur électrique relié à l'au moins un élément de mélange pour l'entraînement en rotation de celui-ci,
- des moyens de stockage, tels que des batteries (12), reliés au moteur électrique pour le stockage et la génération d'énergie électrique au moteur électrique, dans lequel le châssis est construit à partir d'au moins un longeron de châssis (3a, 3b) avec un espace interne (11) dans lequel les moyens de stockage d'énergie sont reçus,
dans lequel la cuve de mélange est agencée sur le châssis pour se déplacer par rapport au châssis.

2. Dispositif d'alimentation-mélangeur selon la revendication 1, dans lequel la cuve de mélange est reliée au châssis pour pivoter autour d'un axe de pivotement, et dans lequel le dispositif d'alimentation-mélangeur comprend des moyens de déplacement fonctionnant entre le châssis et la cuve de mélange pour faire pivoter la cuve de mélange autour de l'axe de pivotement par rapport au châssis.

3. Dispositif d'alimentation-mélangeur selon la revendication 2, dans lequel le châssis est construit essentiellement à partir de deux longerons de châssis parallèles situés à une distance mutuelle et s'étendant dans une direction longitudinale du dispositif d'alimentation-mélangeur, chacun des deux longerons de châssis ayant à la position de leurs surfaces d'extrémité externe opposées, un point de support pour supporter la cuve de mélange avec ceux-ci à la position de, ou au moins près d'un coin respectif de celle-ci, deux points de support situés sur la même surface d'extrémité respective des longerons de châssis définissant l'axe de pivotement.

4. Dispositif d'alimentation-mélangeur selon la revendication 3, dans lequel les points de support prévus sur la surface d'extrémité externe avant des longerons de châssis ainsi que les points de support prévus sur l'autre surface d'extrémité externe arrière opposée des longerons de châssis forment respectivement un axe de pivotement avant et arrière, dans lequel les moyens de déplacement fonctionnent à peu près au milieu entre les extrémités externes avant et arrière, dans lequel le dispositif d'alimentation-mélangeur comprend des moyens de blocage pour permettre un blocage mutuellement indépendant du déplacement de la cuve de mélange par rapport au châssis respectivement au niveau des axes de pivotement avant et arrière.

5. Dispositif d'alimentation-mélangeur selon l'une quelconque des revendications précédentes, dans lequel chacun de l'au moins un longeron de châssis a une section transversale rectangulaire avec quatre parties de paroi périphérique, comprenant une partie de base formée par trois des quatre parties de paroi périphérique, et une partie de couverture qui est reliée de manière amovible à la partie de base et qui forme la quatrième des quatre parties de paroi périphérique.

6. Dispositif d'alimentation-mélangeur selon la revendication 5, dans lequel la partie de base est formée par une paroi inférieure et deux parois latérales mutuellement opposées du longeron de châssis, et dans lequel la partie de couverture forme une paroi supérieure du longeron de châssis.

7. Dispositif d'alimentation-mélangeur selon la revendication 6, dans lequel la partie de couverture et la partie de base sont configurées de sorte que, en utilisant des moyens de liaison, elles puissent être fixées mutuellement sur la longueur du longeron de châssis.

8. Dispositif d'alimentation-mélangeur selon l'une quelconque des revendications précédentes, dans lequel les moyens de stockage comprennent une pluralité de batteries mutuellement montées en série, la pluralité de batteries comprenant de préférence des éléments de batterie de traction d'environ 2 V.

9. Dispositif d'alimentation-mélangeur selon les revendications 8 et 5 ou une revendication dépendant de celles-ci, dans lequel des surfaces d'extrémité externe de la partie de base de l'au moins un longeron de châssis sont fermées par des plaques d'extrémité et dans lequel la partie de couverture ferme au moins essentiellement complètement le côté ouvert de la partie de base, dans lequel le longeron de châssis comprend un passage de gaz de l'espace interne à l'environnement extérieur dans le but de guider une émission de gaz des éléments de batterie de traction hors de l'espace interne pendant le fonctionnement.

10. Dispositif d'alimentation-mélangeur selon l'une quelconque des revendications précédentes, dans lequel le châssis comprend un guide et la cuve de mélange comprend un contre-guide qui coopère avec le guide pour déplacer la cuve de mélange sur le guide dans le but de retirer la cuve de mélange au moins partiellement du châssis, le dispositif d'alimentation-mélangeur comprenant de préférence des pieds de support dans le but de supporter une partie de la cuve de mélange retirée du châssis, dans le cas où la cuve de mélange est au moins partiellement retirée du châssis.

11. Dispositif d'alimentation-mélangeur selon l'une quelconque des revendications précédentes, les moyens de déplacement comprenant des moyens d'abaissement pour déplacer le châssis vers le bas vers une surface de sol par rapport à des essieux des roues du dispositif d'alimentation-mélangeur, dans lequel la cuve de mélange est munie de pieds de support pour supporter la cuve de mélange directement sur le sol au moins pendant le déplacement vers le bas du châssis.

12. Dispositif d'alimentation-mélangeur selon l'une quelconque des revendications précédentes, dans lequel au moins une/des cloison(s) longitudinale et/ou transversale est/sont agencée(s) dans l'espace interne de l'au moins un longeron de châssis pour subdiviser l'espace interne en une pluralité de compartiments.

13. Dispositif d'alimentation-mélangeur selon l'une quelconque des revendications précédentes, dans lequel le dispositif d'alimentation-mélangeur est, incorporé en tant que véhicule pouvant être commandé et mobile de manière indépendante, et comprend à cet effet un moteur d'entraînement tel qu'un moteur à combustion pour déplacer le dispositif d'alimentation-mélangeur sur une surface de sol et au moins deux essieux avec des roues, dont au moins un essieu est un essieu directeur.

14. Dispositif d'alimentation-mélangeur selon la revendication 13, comprenant un poste de conducteur et un dispositif de direction pouvant être commandé par un conducteur sur le dispositif d'alimentation-mélangeur et relié à l'essieu directeur.

15. Procédé pour réaliser une maintenance sur un dispositif d'alimentation-mélangeur (1) selon l'une quelconque des revendications précédentes 2 à 14, comprenant les étapes qui consistent :
a) à éloigner la cuve de mélange (10) du châssis avec les moyens de déplacement,
b) à fournir un accès à l'espace interne (11) de l'au moins un longeron de châssis,
c) à inspecter les moyens de stockage d'énergie (12) au moins par un individu, et
d) à ramener la cuve de mélange au châssis à nouveau avec les moyens de déplacement.
